# EUROPEAN PATENT SPECIFICATION

(11) **EP 1 699 718 B1**
(45) Date of publication and mention of the grant of the patent: **16.04.2008**
(21) Application number: 04800163.0
(22) Date of filing: 04.11.2004
(51) Int. Cl.: B65G 69/28

(54) **LOADING RAMP FOR LOADING PLATFORMS**
LADERAMPE ZUM BELADEN VON PLATTFORMEN
RAMPE DE CHARGEMENT POUR UNE PLATE-FORME DE CHARGEMENT

(30) Priority: 07.11.2003 NL 1024733
(43) Date of publication of application: 13.09.2006
(73) Proprietor: DYNA SEAL BV, 1822 BB Alkmaar (NL)
(72) Inventor: BORCHARDT, Horst, NL-1822 BB Alkmaar (NL)
(74) Representative: Koomen, M.J.I.
(86) International application number: PCT/NL2004/000770
(87) International publication number: WO 2005/044704

(56) References cited:
- DE-U1- 29 618 180
- US-B1- 6 327 733

## Description

The present invention relates to a loading ramp for loading platforms, formed by a frame structure with a bridge plate which at its loading platform edge is pivotally connected to the loading platform and the front edge of which is intended to rest upon the loading floor of a vehicle, with one or more lift cylinders for the raising of the bridge plate, with a feed line for the supply of the pressure medium into the lift cylinder and with a return line for the return flow of the pressure medium out of the lift cylinder, which return line is provided with a valve, whereby, when the valve is opened the pressure medium is allowed to flow out of the lift cylinder through the return line under the weight of the bridge plate, in such a way that the bridge plate can pivot downwards.

Such a loading ramp is known, an example according to the preamble of claim 1 is disclosed in DE-U-296 18 180.

With the known loading ramp the front edge of the bridge plate or the front edge of an extendible supporting plate provided on the bridge plate is intended to rest upon the loading floor of a vehicle. When the vehicle is being loaded the vehicle is compressed under the increasing weight and moves down. The bridge plate pivots along with this movement and continues to lean upon the loading floor of the vehicle. In the case of larger vehicles this manner of loading poses no problems. However, in the case of smaller vehicles, such as small vans, the disadvantage can occur, that the weight of the bridge plate and of the transport means moving over the bridge plate is too heavy for the vehicle.

It is an object of the present invention to provide a loading ramp by means of which this drawback is obviated.

The loading ramp according to the invention is described in the appended claim 1.

According to an optional characteristic of the loading ramp according to the invention the valve is closed when the pin is in the first position and protrudes out of the housing.

According to a further optional characteristic of the loading ramp according to the invention, the valve is open when the pin is in the second position and is countersunk in the housing.

According to another optional characteristic of the loading ramp according to the invention the pin is a spring loaded pin, whereby the pin can be pushed against spring force from the first position into the second position.

According to yet another optional characteristic of the loading ramp according to the invention at the front edge of the bridge plate a frame with a supporting plate is provided, which frame is extendible in the horizontal direction, while the supporting plate is intended to rest with its front edge upon the loading floor of a vehicle, whereby the frame is supported at one or both sides at a pivoting point in the frame structure, whereby the frame can pivot along the pivoting point from a position in which the front edge of the frame is inclined downwards and the rear edge is inclined upwards to a position in which the front edge is inclined upwards and the rear edge is inclined downwards, and by means of which pivoting of the frame the pin is moved into and out of the housing of the valve.

According to an optional characteristic of the loading ramp according to the invention when the frame is pivoted into a position in which the front edge of the frame is inclined downwards and the rear edge of the frame is inclined upwards, the afore mentioned rear edge of the frame pushes the pin into the housing of the valve, and thereby into the second position, such that the valve is opened.

According to yet a further optional characteristic of the loading ramp according to the invention when the frame is pivoted into a position in which the front edge of the frame is inclined upwards and the rear edge of the frame is inclined downwards, in between the afore mentioned rear edge of the frame and the housing of the valve a space is present, such that the pin protrudes out of the housing of the valve, and thereby is in the first position, such that the valve is closed.

With the loading ramp according to the invention it is achieved that, when the bridge plate with the wholly or partly extended frame with the supporting plate is placed onto the loading floor of a vehicle and comes to rest there upon, the pin in the valve is moved in the first position whereby the valve is closed. No pressure medium can flow out of the lift cylinder, so that the lift cylinder maintains the bridge plate in an upwards position. The weight of the bridge plate and of any transport means moving over the bridge-plate are not borne by the vehicle but by the lift cylinder.

Further characteristics and particulars will be described with reference to the drawings of an example of an embodiment.
Figure 1 shows in section a side view of an example of an embodiment of the loading ramp according to the invention.
Figure 2a shows in section a part of a side view of an example of an embodiment of the loading ramp according to the invention.
Figure 2b shows enlarged a detail of figure 2a.
Figure 3 shows a perspective view of an example of an embodiment of a valve as this is applied in the invention.

The figures 4 and 5 show a hydraulic diagram, whereby figure 4 relates to a system as this is applied with smaller vans, and whereby figure 5 relates to a system as this is applied with large trucks.

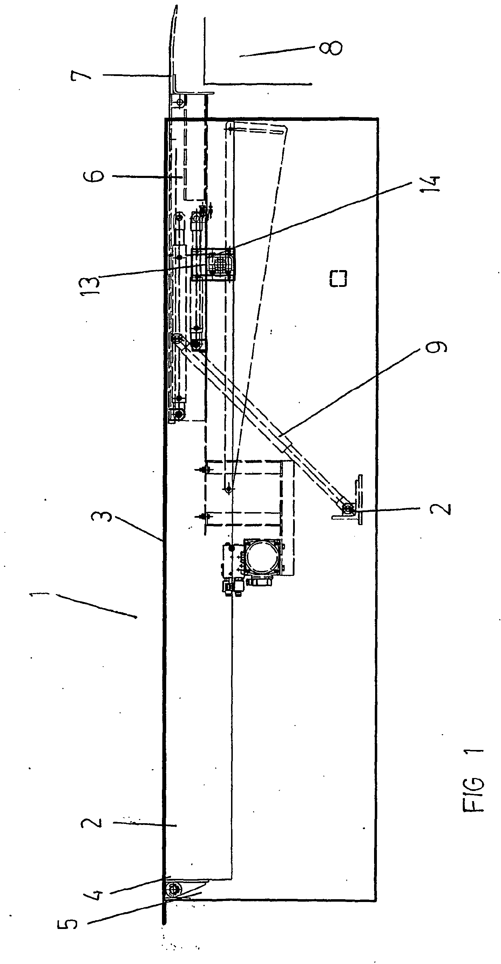

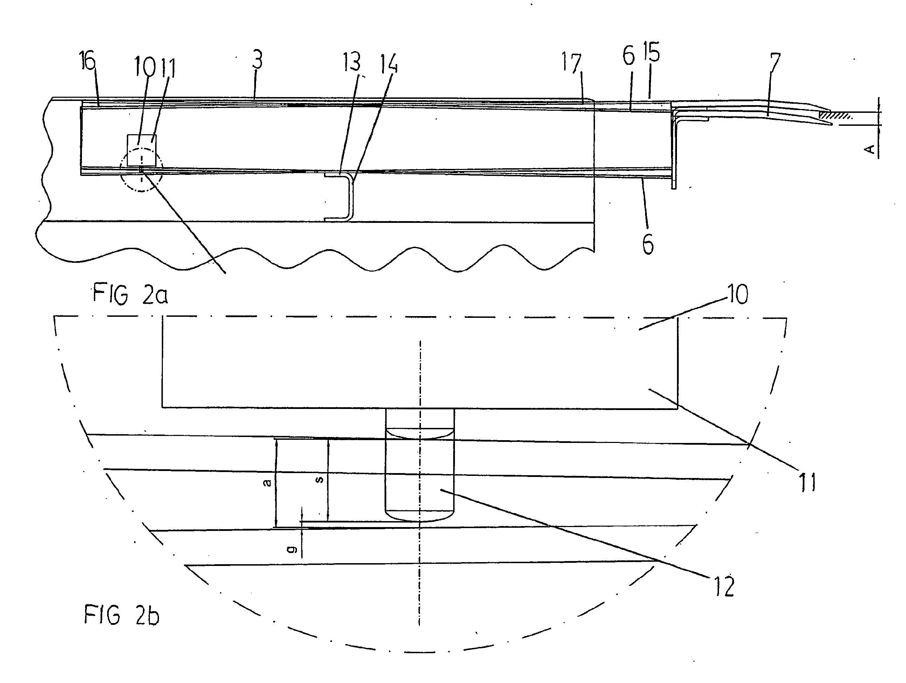

In the figures 1 and 2 a loading ramp is shown, formed by a frame structure 2 with a bridge plate 3 which at its loading platform edge 4 is pivotally connected to the loading platform 5. At the front edge of the bridge plate 3 an extendible frame 6 with at its front edge a supporting plate 7 is provided, which is intended to rest upon the loading floor 8 of a vehicle.

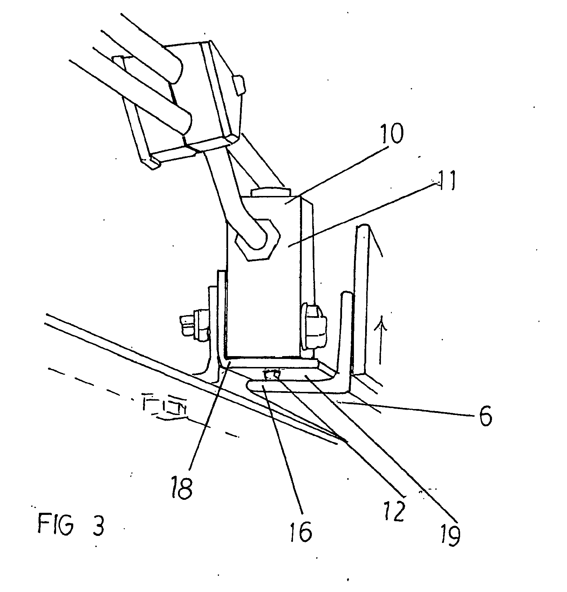

Further is shown in figure 1 a lift cylinder 9 for the raising of the bridge plate 3. Further are provided a feed line (not shown in the drawing) for the supply of the pressure medium into the lift cylinder 9 and a return line (not shown in the drawing) for the return flow of the pressure medium out of the lift cylinder 9, which return line is provided with a valve 10 (see figure 2a). When the valve 10 is opened the pressure medium can flow out of the lift cylinder 9 through the return line under the weight of the bridge plate 3, in such a way that the bridge plate can pivot downwards. As can be seen in figures 2a and 2b, the valve 10 comprises a housing 11 which is provided with a pin 12. The pin 12 can be pushed from a first position, in which the pin 12 protrudes out of the housing 11, into the housing 11 into a second position, in which the pen 12 completely or almost completely is countersunk in the housing 11. The valve 10 is carried out in such a way that by moving the pin 12 from the one to the other position the valve 10 is opened and closed. In this example of an embodiment of the loading ramp according to the invention the valve 10 is carried out such that it is open when the pin 12 is in the second, pushed in, position and it is closed when the pin 12 is in the first position and protrudes out of the housing 11.
The pin 12 is a spring loaded pin, so that the pin 12 can be pushed against spring force from the first position into the second position, and springs back when the pin is no longer pushed inside any more.
The frame 6 is supported at one or both side edges 13 at a pivoting point 14 in the frame structure 2, whereby the frame 6 can pivot along the pivoting point 14 from a position in which the front edge 15 of the frame 6 is inclined downwards and the rear edge 16 of the frame 6 is inclined upwards to a position in which the front edge 15 of the frame 6 is inclined upwards and the rear edge 16 of the frame 6 is inclined downwards. Thereby the path of movement upwards of the front edge 15 of the frame 6 is limited by the front edge 17 of the bridge plate 3, against which the upper side of the front edge 15 of the frame 6 comes into contact. As can be seen more in particular in figure 3, the path of movement upwards of the rear edge 16 of the frame 6 is limited by the valve 10 provided to a part 18 of the frame structure. As can be seen in figure 3, on its movement upwards (see arrow) the rear edge 16 of the frame pushes the pin 12 into the housing 11 of the valve 10.

When the loading ramp with the supporting plate 7 does not rest upon the loading floor 8 of a vehicle, the front edge 15 of the frame 6 is inclined downwards because it is not supported from underneath, and the rear edge 16 of the frame 6 is inclined upwards. In this position the rear edge 16 pushes the pin 12 into the housing 11 in the second position so that the valve 10 is open. The pressure medium can flow out of the lift cylinder 9 through the return line under the weight of the bridge plate, and the bridge plate 3 can move down.
When the supporting plate 7 comes to rest upon the loading floor 8 of a vehicle, the frame 6 will pivot through the pivoting point 14 with its front edge 15 upwards until the front edge 15 of the frame 6 touches against the front edge 17 of the bridge plate 3.
The front edge 15 of the frame 6 cannot move upwards further because it is held back by the front edge 17 of the bridge plate. The rear edge 16 of the frame pivots downwards, which creates a space 19 between the rear edge 16 of the frame and the pin 12. Because of this the pin 12 is no longer pushed into the housing 11 by the rear edge 16, so that the pin 12 springs outwards. Because of this, the valve takes in the first position and the valve is closed and the flowing out of the pressure medium out of the lift cylinder 9 through the return line is stopped and with that the downwards movement of the bridge plate 3 is stopped.

In figure 2a this small tilting movement of the frame 6 is indicated with the capital letter "A", while in figure 2b it is further indicated that the movement "A" of the frame gives a movement "a", which movement "a" is divided in a movement "s" (the stroke of the pen 14 or the valve). As soon as gap "g" comes about the valve is closed, and the flowing out through the return line of the pressure medium out of the lift cylinder 11 and with that the downwards movement of the bridge plate 3 is stopped.

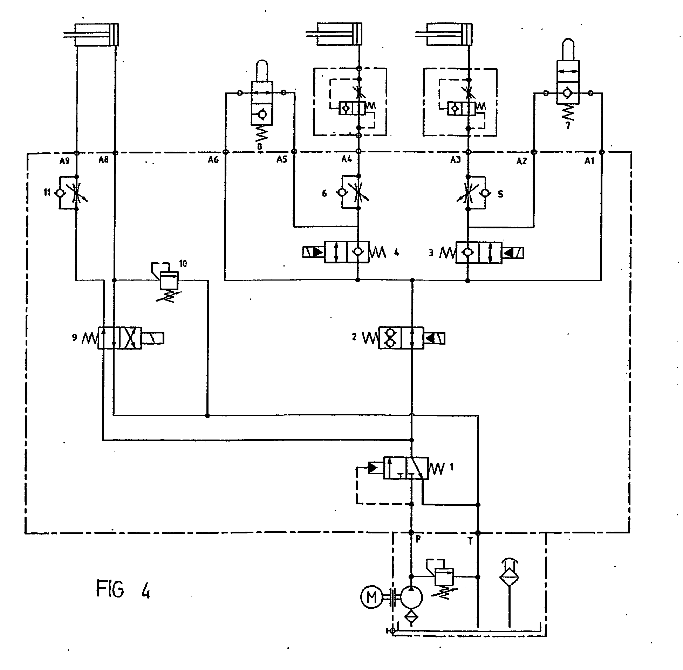

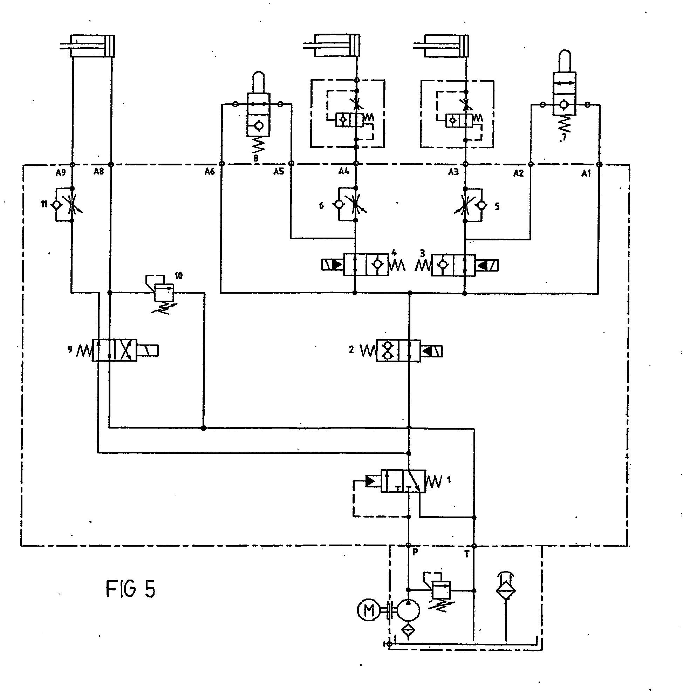

The figures 4 and 5 show a hydraulic diagram, whereby figure 4 relates to a system as this is applied with smaller vans, and in which figure 5 relates to a system as this is applied with large trucks.

### Figure 4. Small vans.

In the application for small vans it pertains to the downwards movement.
1.Hereby the valve 2 is always open.
2.Valve 3 and 4 are then closed.
3.Lift cylinder 2 and valve 8 show the downwards movement. The front edge or rather lip of the supporting plate is not yet in contact with the floor of the van. Oil flows out of the lift cylinder to the oil tank, through valve 6, 8 and 2.
4. Lift cylinder 1 and valve 7 show that the movement has stopped; valve 7 is closed.
5. In this situation only the weight of the part of the lip, due to the centre of gravity which is slightly before the pivoting point, rests upon the floor of the small van (the force that is required to stop the downwards movement of the loading ramp). The remainder of the weight, including the transport means, is borne by the lift cylinders (bridge plate, supporting plate, remainder of the lip and the transport means, as long as the transport means still stands on the bridge plate or the supporting plate.)

### Figure 5. Large trucks.

In the application for large trucks it also only pertains to the downwards movement.
1 .Valve 2, 3 and 4 are always open.
2. Valve 7 and 8 do not have a function anymore; the oil can flow through the valves 3 and 4.
3. The downwards movement is stopped by the loading floor of the truck. The full weight of the platform, the lip or supporting plate and the transport means rest upon the floor of the truck.

The invention is not limited to the example of the embodiment described above, but to the scope of the appended claims.

In the example of the embodiment described above the valve is fixedly mounted to the bridge plate or the frame structure of the loading ramp. The frame tilts relative thereto and by this movement the pen is moved into and out of the housing of the valve and the valve is thereby opened and closed. The other way round it is also possible to mount the valve onto the movable frame, whereby, by the movement of the frame the valve is brought into contact with a fixed frame structure part and by means of which the valve can be operated.

## Claims

1. Loading ramp (1) for loading platforms (5), formed by a frame structure (2) with a bridge plate (3) which at its loading platform edge (4) is pivotally connected to the loading platform (5) and the front edge of which is intended to rest upon on the loading floor (B) of a vehicle, with one or more lift cylinders (9) for the raising of the bridge plate (3), with a feed line for the supply of the pressure medium into the lift cylinder (9) and with a return line for the return flow of the pressure medium out of the lift cylinder, said return line is provided with a valve (10), whereby, when the valve is opened the pressure medium is allowed to flow out of the lift cylinder through the return line under the weight of the bridge plate (3), in such a way that the bridge plate can pivot downwards, **characterized in that** the valve (10) comprises a housing (11) provided with a pin (12), said pin (12) is movable from a first position, in which the pen (12) protrudes out of the housing (11), into a second position, in which the pin, in part or completely, is countersunk in the housing, whereby, by moving the pin from the one to the other position the valve (10) is opened and closed, while the valve is provided on the loading ramp (1) in such a way, that when the bridge plate (3) comes to rest upon the loading floor (8) of a vehicle, the pin (12) in the housing (11) is moved from the one to the other position, and by means of which the valve is closed, so that no pressure medium can flow out of the lift cylinder (9) and said lift cylinder (9) holds the bridge plate (3) upwards.

2. Loading ramp according to claim 1, **characterized in that** the valve (10) is closed when the pin (12) is in the first position and protrudes out of the housing (11).

3. Loading ramp according to claim 1 or 2, **characterized in that** the valve (10) is open when the pin (12) is in the second position and is countersunk in the housing (11).

4. Loading ramp according to claim 1, 2 or 3, **characterized in that** the pin (12) is a spring loaded pin, whereby the pin can be pushed against spring force from the first position into the second position.

5. Loading ramp according to claim 1,2, 3 or 4, **characterized in that** at the front edge (17) of the bridge plate (13) a frame (6) with a supporting plate (7) is provided, which frame is extendible in the horizontal direction, while the supporting plate is intended to rest at its front edge (15) upon the loading floor of a vehicle, whereby the frame (6) is supported at one or both sides at a pivoting point (14) in the frame structure (2), whereby the frame can pivot along the pivoting point from a position in which the front edge (15) of the frame is inclined downwards and the rear edge (16) is inclined upwards to a position in which the front edge is inclined upwards and the rear edge is inclined downwards , and by means of which pivoting of the frame (6) the pin (12) is moved into and out of the housing (11) of the valve (10).

6. Loading ramp according to claim 5, **characterized in that** when the frame (6) is pivoted into a position in which the front edge (15) of the frame is inclined downwards and the rear edge (16) of the frame is inclined upwards, the said rear edge of the frame pushes the pin (12) into the housing (11) of the valve (10), and thereby into the second position, such that the valve is opened.

7. Loading ramp according to claim 5, **characterized in that** when the frame (6) is pivoted into a in which the front edge (15) of the frame is inclined upwards and the rear edge (16) of the frame is inclined downwards, in between the said rear edge (16) of the frame and the housing (11) of the valve (10) a space (19) is present, such that the pin (12) protrudes out of the housing of the valve, and thereby is in the first position, such that the valve is closed.

## Patentansprüche

1. Laderampe (1) für Ladeplattformen (5), umfassend eine Trägerstruktur (2) mit einer Brückenplatte (3), welche an der Ladeplattformkante (4) schwenkbar mit der Ladeplattform (5) verbunden ist und deren Vorderkante zur Ablage auf der Ladefläche (8) eines Fahrzeugs dient, weiterhin umfassend einen oder mehrere Hebezylinder (9) zum Heben der Brückenplatte (3), mit einer Zuleitung zum Zuführen eines Druckmediums in den Hebezylinder (9) und mit einer Ableitung zum Ableiten des Druckmediums aus dem Hebezylinder, wobei die Ableitung ein Ventil (10) umfasst, wobei bei geöffnetem Ventil das Druckmedium unter dem Gewicht der Brückenplatte (3) über die Ableitung aus dem Hebezylinder abfließen kann, so dass die Brückenplatte abwärts schwenkt, **dadurch gekennzeichnet, dass** das Ventil (10) ein Gehäuse (11) mit einem Stift (12) umfasst, wobei der Stift (12) von einer ersten Position, in welcher der Stift (12) aus dem Gehäuse (11) rausragt, in eine zweite Position, in weicher der Stift teilweise oder ganz in dem Gehäuse versenkt ist, bewegbar ist, wobei bei der Bewegung des Stifts von der einen in die andere Position das Ventil (10) geöffnet oder geschlossen wird, wobei das Ventil so an der Laderampe (1) vorgesehen ist, dass wenn die Brückenplatte (3) auf der Ladefläche (8) eines Fahrzeugs zur Auflage kommt, der Stift (12) des Gehäuses (11) von der einen in die andere Position bewegt wird, wodurch das Ventil geschlossen wird, so dass kein Druckmedium aus dem Hebezylinder (9) abfließen kann und der Hebezylinder (9) die Brückenplatte (3) oben hält.

2. Laderampe nach Anspruch 1, **dadurch gekennzeichnet, dass** das Ventil (10) geschlossen ist, wenn der Stift (12) in der ersten Position ist und aus dem Gehäuse (11) rausragt.

3. Laderampe nach Anspruch 1 oder 2, **dadurch gekennzeichnet, dass** das Ventil (10) geöffnet ist, wenn der Stift (12) in der zweiten Position ist und in dem Gehäuse (11) versenkt ist.

4. Laderampe nach Anspruch 1, 2 oder 3, **dadurch gekennzeichnet, dass** der Stift (12) ein federbelasteter Stift ist, wobei der Stift gegen die Federkraft von der ersten in die zweite Position gedrückt werden kann.

5. Laderampe nach Anspruch 1, 2, 3 oder 4, **dadurch gekennzeichnet, dass** an der Vorderkante (17) der Brückenplatte (3) ein Rahmen mit einer Stützplatte (7) vorgesehen ist, wobei der Rahmen in einer horizontalen Richtung ausfahrbar ist, wobei die Vorderseite der Stützplatte zur Auflage auf der Ladefläche eines Fahrzeugs ausgebildet ist, wobei der Rahmen (6) an einer oder beiden Seiten an einem Drehpunkt (14) in der Trägerstruktur (2) gelagert ist, wobei der Rahmen um den Drehpunkt von einer Position, in der die Vorderkante (15) von dem Rahmen abwärts neigt und die Hinterkante (16) aufwärts ragt, in eine Position, in der die Vorderkante aufwärts ragt und die Hinterkante abwärts neigt, schwenkbar ist, wodurch der Stift (12) durch das Schwenken des Rahmens (6) in und aus dem Gehäuse (11) von dem Ventil (10) bewegt wird.

6. Laderampe nach Anspruch 5, **dadurch gekennzeichnet, dass** wenn der Rahmen (6) in eine Position geschwenkt wird, in welcher die Vorderkante (15) des Rahmens abwärts neigt und die Hinterkante (16) des Rahmens aufwärts ragt, die Hinterkante des Rahmens den Stift (12) in das Gehäuse (11) des Ventils (10) drückt, also in die zweite Position, wodurch das Ventil geöffnet wird.

7. Laderampe nach Anspruch 5, **dadurch gekennzeichnet, dass** wenn der Rahmen (6) in eine Position geschwenkt wird, in weicher die Vorderkante (15) des Rahmen aufwärts ragt und die Hinterkante (16) des Rahmens abwärts neigt, ein Spalt (19) zwischen der Hinterkante (16) des Rahmens und dem Gehäuse (11) des Ventils (10) vorhanden ist, so dass der Stift (12) aus dem Gehäuse des Ventils herausragt, also in der ersten Position ist, wodurch das Ventil geschlossen wird.

## Revendications

1. Rampe de chargement (1) pour plates-formes de chargement (5), formée par une structure de bâti (2) avec un pont de liaison (3) qui, au niveau de son bord (4) de plate-forme de chargement, est raccordé de façon pivotante à la plate-forme de chargement (5) et dont le bord antérieur est prévu pour prendre appui sur le plancher de chargement (8) d'un véhicule, avec un ou plusieurs vérins de levage (9) pour soulever le pont de liaison (3) avec une canalisation d'alimentation pour acheminer le milieu sous pression dans le vérin de levage (9) et avec une canalisation de retour pour l'écoulement inverse du milieu sous pression hors du vérin de levage, ladite canalisation de retour est dotée d'une soupape (10), ce par quoi, lorsque la soupape est ouverte, on laisse s'écouler le milieu sous pression hors du vérin de levage par la canalisation de retour sous le poids du pont de liaison (3), de telle sorte que le pont de liaison puisse pivoter vers le bas, **caractérisée en ce que** la soupape (10) comprend un carter (11) doté d'une goupille (12), ladite goupille (12) étant mobile d'une première position dans laquelle la goupille (12) dépasse du carter (11) à une seconde position dans laquelle la goupille est partiellement ou totalement enfoncée dans le carter, ce par quoi, en déplaçant la goupille d'une position à l'autre, on ouvre et on ferme la soupape (10) tandis que la soupape est prévue sur la rampe de chargement (1) de manière à ce que, lorsque le pont de liaison (3) vient en appui sur le plancher de chargement (8) d'un véhicule, la goupille (12) dans le carter (11) soit déplacée d'une position à l'autre et au moyen de laquelle la soupape est fermée, de telle sorte qu'aucun milieu sous pression ne puisse s'échapper du vérin de levage (9) et que ledit vérin de levage (9) maintienne le pont de liaison (3) vers le haut.

2. Rampe de chargement selon la revendication 1, **caractérisée en ce que** la soupape (10) est fermée lorsque la goupille (12) est dans la première position et dépasse du carter (11).

3. Rampe de chargement selon la revendication 1 ou 2, **caractérisée en ce que** la soupape (10) est ouverte lorsque la goupille (12) est dans la seconde position et est enfoncée dans le carter (11).

4. Rampe de chargement selon la revendication 1, 2 ou 3, **caractérisée en ce que** la goupille (12) est une goupille sollicitée par ressort, ce par quoi la goupille peut être poussée contre la pression du ressort de la première position jusque dans la seconde position.

5. Rampe de chargement selon la revendication 1, 2, 3 ou 4, **caractérisée en ce qu'**au bord antérieur (17) du pont de liaison (3), on trouve un bâti (6) avec un plateau de support (7), lequel bâti peut être prolongé dans la direction horizontale tandis que le plateau de support est prévu pour s'appuyer sur son bord antérieur (15) sur le plancher de chargement d'un véhicule, ce par quoi le bâti (6) est supporté au niveau d'un ou des deux bords en un point de pivotement (14) dans la structure (2) de bâti, le bâti pouvant ainsi pivoter le long du point de pivotement d'une position dans laquelle le bord antérieur (15) du bâti est incliné vers le bas et le bord postérieur (16) est incliné vers le haut jusque dans une position dans laquelle le bord antérieur est incliné vers le haut et le bord postérieur est incliné vers le bas et pivotement du bâti (6) au moyen duquel la goupille (12) est déplacée à l'intérieur et à l'extérieur du carter (11) de la soupape (10).

6. Rampe de chargement selon la revendication 5, **caractérisée en ce que** lorsque le bâti (6) est tourné dans une position dans laquelle le bord antérieur (15) du bâti est incliné vers le bas et le bord postérieur (16) du bâti est incliné vers le haut, ledit bord postérieur du bâti pousse la goupille (12) dans le carter (11) de la soupape (10) et donc dans la seconde position de manière à ouvrir la soupape.

7. Rampe de chargement selon la revendication 5, **caractérisée en ce que**, lorsque le bâti (6) est tourné dans une position dans laquelle le bord antérieur (15) du bâti est incliné vers le haut et le bord postérieur (16) du bâti est incliné vers le bas, un espace (19) étant présent entre ledit bord postérieur (16) du bâti et le carter (11) de la soupape (10), de telle sorte que la goupille (12) dépasse du carter de la soupape et se trouve ainsi dans la première position de manière à fermer la soupape.
